# EUROPEAN PATENT APPLICATION

(11) **EP 1 814 109 A1**
(43) Date of publication of application: **01.08.2007**
(21) Application number: 06290181.4
(22) Date of filing: 27.01.2006
(51) Int. Cl.: G10L 21/02, H03G 3/20, H04R 25/00

(54) **Voice amplification apparatus for modelling the Lombard effect**

(71) Applicant: Texas Instruments Incorporated, Dallas, TX 75265 (US)
(72) Inventor: La Faucher, Laurent, Cap d'Antibes 06160 (FR)
(74) Representative: Holt, Michael

(57) **Abstract**

A communication apparatus comprising an audio input device adapted to capture a first audio sample, where the first audio sample comprises a noise component. The apparatus further comprises signal processing logic coupled to the audio input device. If the intensity of the noise component is equal to or greater than.the intensity of a voice component of a second audio sample received from a different communication apparatus, the signal processing logic amplifies the voice component.

## Description

### BACKGROUND

The Lombard Effect is the tendency for a person to increase vocal intensity in response to background noise such that the person's voice can be heard over the background noise. For example, the Lombard Effect is often observed in people participating in face-to-face conversations that occur in noisy environments. Use of the Lombard Effect by a person generally depends on the person's recognition that in order to be heard, he or she must increase his or her vocal intensity above that of the background noise.

In some situations, however, the person is unable to appreciate the need for increased vocal intensity. For example, during a telephone conversation, person "A" may speak with person "B," where persons A and B are in different environments. Person A may be in a quiet environment, such as an office, whereas person B may be in a noisy environment, such as a busy street. Because Person A is in a quiet environment, he or she may not appreciate the need to speak with increased vocal intensity so that his or her voice can be heard by Person B. Thus, Person B may have difficulty hearing Person A.

### BRIEF SUMMARY

Disclosed herein is a device and method by which voice signals are selectively amplified to make the voice signals audible over noise signals. An illustrative embodiment includes a communication apparatus comprising an audio input device adapted to capture a first audio sample, where the first audio sample comprises a noise component. The apparatus further comprises signal processing logic coupled to the audio input device. If the intensity of the noise component is equal to or greater than the intensity of a voice component of a second audio sample received from a different communication apparatus, the signal processing logic amplifies the voice component.

Yet another illustrative embodiment includes an apparatus comprising a processor adapted to receive a first audio signal having a noise component and a second audio signal having a voice component. The apparatus also comprises an amplifier coupled to the processor. The processor determines the difference in intensity between the noise and voice components. If the difference is within a predetermined range, the amplifier amplifies the voice component.

Yet another illustrative embodiment includes a method which comprises receiving a first audio sample having a voice component and a second audio sample having a noise component. The method also comprises determining the difference in intensity, between the voice and noise components and, if the difference is below a predetermined threshold, amplifying the voice component until the difference meets or exceeds the predetermined threshold. The first and second audio samples are received from different communication devices.

### NOTATION AND NOMENCLATURE

Certain terms are used throughout the following description and claims to refer to particular system components. As one skilled in the art will appreciate, various companies may refer to a component by different names. This document does not intend to distinguish between components that differ in name but not function. In the following discussion and in the claims, the terms "including" and "comprising" are used in an open- ended fashion, and thus should be interpreted to mean "including, but not limited to." Also, the term "couple" or "couples" is intended to mean either an indirect or direct connection. Thus, if a first device couples to a second device, that connection may be through a direct connection, or through an indirect connection via other devices and connections. The term "intensity," in at least some embodiments, refers to the decibel rating of a signal.

### BRIEF DESCRIPTION OF THE DRAWINGS

For a more detailed description of the preferred embodiments of the present invention, reference will now be made to the accompanying drawings, wherein:
Figure 1 shows a pair of mobile devices communicating with each other in accordance with preferred embodiments of the invention;
Figure 2 shows another pair of mobile devices communicating with each other in accordance with embodiments of the invention;
Figure 3 shows a block diagram of signal processing circuitry contained in a mobile device of Figure 1, in accordance with preferred embodiments of the invention; and
Figure 4 shows a flow diagram of a method used in accordance with embodiments of the invention.

### DETAILED DESCRIPTION OF THE PREFERRED EMBODIMENTS

The following discussion is directed to various embodiments of the invention. Although one or more of these embodiments may be preferred, the embodiments disclosed should not be interpreted, or otherwise used, as limiting the scope of the disclosure, including the claims, unless otherwise specified. In addition, one skilled in the art will understand that the following description has broad application, and the discussion of any embodiment is meant only to be exemplary of that embodiment, and not intended to intimate that the scope of the disclosure, including the claims, is limited to that embodiment.

Disclosed herein is a device which receives a speech signal from a person and which determines whether background noise intensity (e.g., decibel rating) is greater than the intensity of the received signal. If the background noise intensity is greater than the speech intensity, the device amplifies (i.e., applies the Lombard Effect to) the speech such that the speech intensity is greater than the background noise intensity. In this way, the speech is audible over the background noise. The device may be implemented, for instance, in mobile communication devices such as cellular telephones, combination cell phones/personal digital assistants (PDAs), land-line telephones, walkie-talkies, radios, and other suitable communication devices.

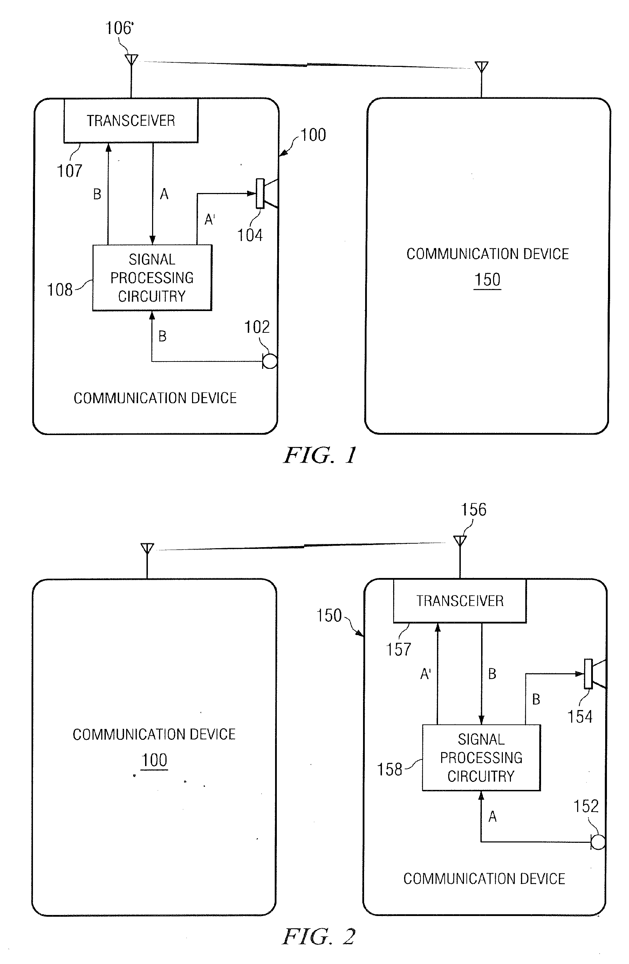

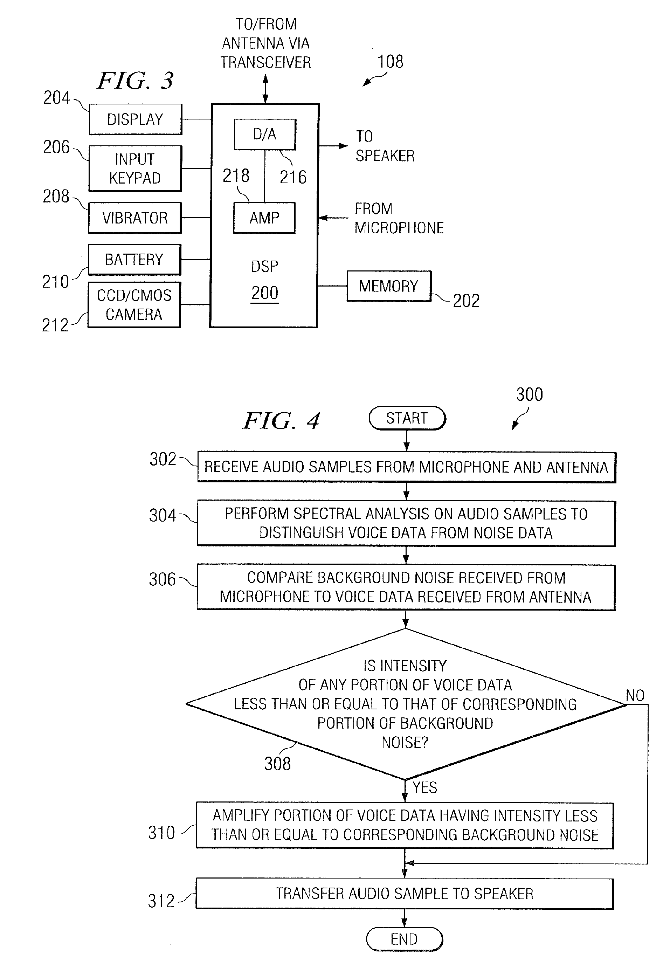

Figure 1 shows a communication device 100 in communication with a communication device 150. The device 100 comprises a microphone 102, a speaker 104, an antenna 106, a transceiver 107 and signal processing circuitry 108. The device's signal processing circuitry 108 may comprise circuitry (shown in Figure 3) which enables the device 100 to communicate with the device 150. For example, such circuitry may comprise a processor, memory and a power supply. Likewise, the device 150 comprises circuitry (e.g., antenna, transceiver) which enables the device 150 to communicate with the device 100.

Continuing with the example above, assume person A uses the device 150 in a quiet environment (e.g., an office) and person B uses the device 100 in a noisy environment (e.g., on a busy street). Person A speaks into the device 150. The device 150 captures Person A's speech and converts the speech into digital signals which are subsequently modulated and broadcast to the antenna 106 of device 100. In at least some embodiments, the wireless signals are encoded not only with the speech of Person A, but also with the background noise present in Person A's environment.

The wireless signals transmitted by device 150 are received by device 100 via antenna 106. The wireless signals received from device 150 are represented by arrows marked "A," since device 150 is used by Person A. The signals represented by arrows "A" represent a continuous feed of data transmitted from device 150 to device 100 for a finite length of time. For instance, arrows A may represent a 15-minute continuous stream of audio data for a 15-minute telephone conversation between Persons A and B. The signals represented by arrows A comprise a series of audio samples. The audio samples may be of the same length or, in some embodiments, of different lengths. In at least some embodiments, the audio samples are on the order of several milliseconds. The signal processing circuitry 108 preferably processes one audio sample from signals A at a time.

The signal processing circuitry 108 receives the audio samples via the antenna 106 and transceiver 107 (which demodulates the samples) and converts the digital signals to analog signals. As described in detail below, the circuitry 108 analyzes the audio samples to distinguish between Person A's voice and the background noise of Person A's environment. Having distinguished the portions of the audio samples which correspond to Person A's voice, the circuitry 108 determines whether any portion of the signals corresponding to Person A's voice should be amplified (i.e., whether the Lombard Effect should be applied). Specifically, the circuitry 108 compares the intensity of Person A's voice to the intensity of the background noise of Person B's environment. As previously described, if the intensity of the background noise of Person B's environment is more intense than Person A's voice, Person B will be unable to hear Person A.

Several milliseconds may elapse between the time an audio sample is transmitted from device 150 and the time at which the same audio sample reaches device 100. The background noise of Person B's environment may change (e.g., become more intense) during this time period. For this reason, the above-mentioned comparison preferably is performed using the most current background noise data available. Specifically, the comparison preferably takes place between background noise encoded on audio samples captured by microphone 102 (indicated by arrows marked "B") at or about the time that audio samples from device 150 are received by the circuitry 108. In this way, the circuitry 108 is able to adjust the intensity of Person A's received voice samples based on the most current background noise intensity captured by microphone 102. Conversely, although not preferred, it is possible to compare audio samples captured by microphone 102 at the same time that audio samples are captured by device 150. Although within the scope of this disclosure, this technique is not preferred because by the time the audio samples from device 150 are received by the circuitry 108, the background noise intensity data captured by microphone 102 may be outdated.

If, while comparing audio samples from signals A and B, the circuitry 108 determines that a portion of signal B is encoded with background noise more intense than voice encoded on a corresponding portion of signal A, the circuitry 108 preferably amplifies Person A's received voice data such that the voice encoded on that portion of signals A is more intense (i.e., has a greater decibel rating) than the corresponding background noise encoded on signals B. In some embodiments, the circuitry 108 may amplify Person A's voice data until the intensity of the voice data exceeds a predetermined threshold, or until the intensity of the voice data falls within a desired, predetermined range of intensities, or until the intensity of the voice data falls outside of an undesired, predetermined range of intensities.

The threshold and/or predetermined range(s) may be programmed into software stored in the circuitry 108, and may be adjustable by a user. For instance, in some embodiments, a user may adjust the threshold and/or predetermined range(s) using software provided on the device 100. In other embodiments, a wheel, button or other hardware feature (not specifically shown) may be used to adjust the threshold and/or predetermined range(s). In at least some embodiments, such a hardware feature may be dedicated only to adjusting the threshold and/or predetermined range(s). The adjustment capability may be enabled or disabled as desired, possibly through software running on the device 100 or through a hardware feature provided on the device 100. The signals output by the circuitry 108 to the speaker 104 (i.e., to a user of the device 100), regardless of whether the signals are amplified, are marked by arrow "A'." The circuitry 108 may forward signals B from the microphone 102 to the antenna 106 for transmission.

Figure 1 illustrates the capability of the circuitry 108 to selectively amplify signals received from communication device 150. However, in at least some embodiments, the device 150 may selectively amplify signals A before they are transmitted to the device 100. Figure 2 shows the communication devices 100 and 150 of Figure 1. The device 150 comprises a microphone 152, a speaker 154, an antenna 156, a transceiver 157 and signal processing circuitry 158. Signals B are transmitted from device 100 to the antenna 156 of device 150 and further to signal processing circuitry 158. Like the circuitry 108, the circuitry 158 first de-modulates the audio samples received via the antenna 156 (using transceiver 157) and converts the digital signals to analog signals. The circuitry 158 analyzes the audio samples to distinguish between Person B's voice and the background noise of Person B's environment. Having identified the portions of the audio samples which correspond to Person B's voice, the circuitry 158 determines whether any portion of the signals corresponding to Person A's voice should be amplified (i.e., whether the Lombard Effect should be applied) and acts accordingly.

The circuitry 158 determines whether any portion of signals A should be amplified by comparing signals A and B as described above. In particular, the circuitry 158 compares the background noise encoded in signals B to the speech encoded in signals A. If the background noise in signals B is more intense than the speech encoded in signals A, the circuitry 158 may amplify one or more portions of signals A. Specifically, the circuitry 158 may amplify one or more portions of signals A until the speech encoded in signals A is audible over the corresponding background noise encoded in signals B. In the Figure, the signals transferred from circuitry 158 to transceiver 157 are marked as "A"' and comprise both adjusted (i.e., amplified) and non-adjusted signals. The signals A' are transferred from the transceiver 157 to the antenna 156 for transmission to device 100. In this way, the circuitry 158 selectively amplifies Person A's speech prior to transmission to device 100. The circuitry 158 also may transfer signals B to the speaker 154. The contents of the signal processing circuitry 108 and 158 are now described in detail.

Figure 3 shows a detailed view of the signal processing circuitry 108. The components shown in Figure 3 also may be included in the circuitry 158, since circuitry 108 and 158 are substantially similar to each other. The circuitry 108 comprises a digital signal processor (DSP) 200, which is a processor used to efficiently and rapidly perform signal processing calculations on digitized signals (e.g., voice signals). The circuitry 108 further comprises a memory 202 coupled to the DSP 200. In at least some embodiments, the memory 202 comprises a read-only memory (ROM), and in other embodiments, the memory 202 comprises a combination of ROM and random-access memory (RAM). Although not specifically shown, the circuitry 108 may comprise various firewalls, security controllers, DMA controllers, and/or other components which regulate access to the memory 202. Various software applications may be stored on the memory 202 while being executed by the DSP 200. The circuitry 108 may comprise an amplifier 218 used to amplify audio signals and a digital-to-analog (D/A) converter 216 to convert digital signals to analog signals. The circuitry 158 may further comprise various user-interactive devices, including a display 204, an input keypad 206, a vibrating device 208, a battery 210 and/or a charge-couple device (CCD)/complementary metal oxide semiconductor (CMOS) camera. The DSP 200 may receive signals from and send signals to the antenna 106 via the transceiver 157. The DSP 200 also may receive audio samples captured by microphone 102 and may output audio samples to speaker 104. In at least some embodiments, some or all of the components shown in Figure 3 may be incorporated onto a single chip, known as a system-on-chip ("SoC").

In operation, the DSP 200 receives audio samples from the antenna 106 and the microphone 102. Samples from the antenna 106 correspond to the voice and background noise of Person A and Person A's environment, respectively, and samples from the microphone 102 correspond to the voice and background noise of Person B and Person B's environment, respectively. Audio samples may vary in length (e.g., on the order of nanoseconds or milliseconds). The DSP 200 processes audio samples using signal processing software stored on the memory 202. In particular, when executed, the software causes the DSP 200 to convert the digital signals A to analog form using D/A 216 and to conduct a spectral analysis of the audio samples so as to distinguish voice data from noise data encoded on the audio samples. Noise data generally is erratic in pattern and is high-energy in comparison to voice data. Any of a variety of algorithms may be used by the software to distinguish the voice data from the noise data. One such algorithm is the voice activity detector (VAD) algorithm described in U.S. Patent No. 6,810,273, entitled "Noise Suppression," and incorporated herein by reference.

The background noise captured by microphone 102 is representative of the background noise of Person B's environment. If the intensity of this background noise is greater than the intensity of Person A's voice, Person A's voice will be inaudible to Person B. Accordingly, the DSP 200 compares the intensity of Person A's voice to that of the background noise of Person B's environment. If it is determined that the background noise is more intense than Person A's voice, the DSP 200 may use amplifier 218 to amplify one or more portions of Person A's voice such that it is audible over the background noise. The DSP 200 preferably amplifies only those portions of Person A's voice that are less intense than, or equal in intensity to, the background noise. However, in some embodiments, the DSP 200 may amplify an entire audio sample. In other embodiments, the DSP 200 may amplify only a portion of an audio sample. In yet other embodiments, the DSP 200 may amplify multiple audio samples. The DSP's amplification protocol is determined by the signal processing software stored on memory 202 and may be adjusted by editing the software.

After the appropriate portion(s) of Person A's voice data has been amplified, audio samples (i.e., both amplified and non-amplified audio samples) received from device 150 are forwarded to the speaker 104 in the order they are received by the device 100. In this way, the DSP 200 reacts to increases in background noise by intensifying portions of Person A's voice that would otherwise be inaudible to Person B. Although not explicitly described herein, the DSP 200 may perform additional processing steps on signals received from the antenna 106 and/or the microphone 102. For example, the DSP 200 may compress signals, decompress signals, transfer audio samples captured by microphone 102 to the antenna 106, etc.

Figure 4 shows a flow diagram of a method 300 used to implement the techniques described above. The method 300 begins with receiving audio samples from microphone 102 and from device 100 via antenna 106 (block 302). The method 300 further comprises performing a spectral analysis on the audio samples to distinguish voice data from noise data (block 304). As previously mentioned, noise data typically is more erratic and has higher energy levels than voice data. Any suitable algorithm may be used to distinguish between voice and noise data, such as the VAD algorithm. The method 300 also comprises comparing the background noise captured by microphone 102 to the voice data received via antenna 106 (block 306). If it is determined that one or more portions of the voice data is less than or equal to the noise data in intensity (block 308), the method 300 comprises amplifying these one or more portions of the voice data (block 310). For example, the method 300 may comprise determining the difference in intensity between the noise and voice data and determining whether that intensity falls within some adjustable, predetermined range. Alternatively, the method 300 may comprise determining whether the difference in intensity falls below an adjustable, predetermined threshold.

Amplifying a portion of voice data may include amplifying a portion of an audio sample, an entire audio sample, and/or a series of audio samples. In at least some embodiments, the method 300 comprises amplifying the voice data until it is more intense than the noise data. Furthermore, in some embodiments, the method 300 comprises amplifying the voice data until the difference in intensity between the noise and voice data falls outside the aforementioned predetermined range, or until the difference meets or exceeds the aforementioned threshold. The method 300 comprises transferring the audio samples (both amplified and non-amplified audio samples) to the speaker 104 (block 312) in the order they are received from the device 150.

Although the steps described in Figure 4 are shown in a preferred order, the steps may be performed in any suitable order. Moreover, although the method of Figure 4 is described in the context of device 100 (e.g., the embodiments of Figure 1), the method also may be adapted for implementation in device 150 (e.g., the embodiments of Figure 2).

The above discussion is meant to be illustrative of the principles and various embodiments of the present invention. Numerous variations and modifications will become apparent to those skilled in the art once the above disclosure is fully appreciated. It is intended that the following claims be interpreted to embrace all such variations and modifications.

## Claims

1. A communication apparatus, comprising:
an audio input device adapted to capture a first audio sample, said first audio sample comprising a noise component; and
signal processing logic coupled to said audio input device;
wherein, if the intensity of the noise component is equal to or greater than the intensity of a voice component of a second audio sample received from a different communication apparatus, the signal processing logic amplifies the voice component.

2. The apparatus of claim 1, wherein the signal processing logic amplifies the voice component until the voice component is more intense than the noise component.

3. The apparatus of claim 1, wherein the signal processing logic amplifies the voice component until the difference in intensity between the noise and voice components exceeds a predetermined threshold.

4. The apparatus of claim 3, wherein the predetermined threshold is adjustable.

5. The apparatus of claim 4, wherein the predetermined threshold is adjustable by way of a button or a wheel.

6. The apparatus of claim 1, wherein the signal processing logic amplifies the voice component until the intensity of the voice component is within a predetermined range.

7. The apparatus of claim 6, wherein said predetermined range is adjustable by way of a button or a wheel.

8. The apparatus of claim 1, wherein the apparatus comprises a device selected from the group consisting of a mobile communication device, a land-line telephone, a radio, a walkie-talkie and a personal digital assistant (PDA).

9. An apparatus, comprising:
a processor adapted to receive a first audio sample comprising a noise component and a second audio sample comprising a voice component; and
an amplifier coupled to the processor;
wherein the processor determines the difference in intensity between the noise and voice components;
wherein, if said difference is within a predetermined range, the amplifier amplifies said voice component.

10. The apparatus of claim 9, wherein the predetermined range is adjustable.

11. The apparatus of claim 9, wherein the amplifier amplifies said voice component until said difference is outside the predetermined range.

12. The apparatus of claim 9, wherein the amplifier amplifies said voice component until the voice component is more intense than the noise component.

13. The apparatus of claim 9, wherein the first and second audio samples are captured by different communication devices.

14. The apparatus of claim 9, wherein the first audio sample is received from a device in communications with the processor via a communications network.

15. The apparatus of claim 9, wherein the second audio sample is received from a device in communications with the processor via a communications network.

16. A method, comprising:
receiving a first audio sample comprising a voice component and a second audio sample comprising a noise component;
determining the difference in intensity between the voice and noise components; and
if said difference is below a predetermined threshold, amplifying the voice component until said difference meets or exceeds the predetermined threshold;
wherein the first and second audio samples are received from different communication devices.

17. The method of claim 16, wherein amplifying the voice component comprises amplifying the voice component until the voice component is more intense than the noise component.

18. The method of claim 16, wherein amplifying the voice component comprises amplifying the voice component until said difference falls within a predetermined range.

19. The method of claim 16, wherein amplifying the voice component comprises amplifying the voice component until said difference falls outside a predetermined range.

20. The method of claim 16, wherein the second audio sample is generated after the first audio sample.
